# EUROPÄISCHE PATENTSCHRIFT

(11) **EP 2 514 638 B1**
(45) Veröffentlichungstag und Bekanntmachung des Hinweises auf die Patenterteilung: **26.03.2014**
(21) Anmeldenummer: 12466007.7
(22) Anmeldetag: 13.04.2012
(51) Int. Cl.: B60R 7/04

(54) **Aufhängevorrichtung**
Curtain device
Dispositif de suspension

(30) Priorität: 20.04.2011 CZ 20110230
(43) Veröffentlichungstag der Anmeldung: 24.10.2012
(73) Patentinhaber: Skoda Auto A.S., 293 60 Mladá Boleslav (CZ)
(72) Erfinder: Polacek, Roman, Hradec Kralové 50009 (CZ)

(56) Entgegenhaltungen:
- WO-A1-2010/139452
- DE-U1- 20 013 623
- DE-U1-202008 010 430
- FR-A3- 2 925 423
- US-A- 5 791 614
- US-A1- 2006 144 884

## Beschreibung

### Technisches Gebiet

Die Erfindung betrifft eine an die Metallführungsstäbe der Kopfstütze des Fahrzeugsitzes anbringbare Aufhängevorrichtung, an die man Gegenstände für den Bedarf der Fahrzeuginsassen aufhängen kann.

### Bisheriger Stand der Technik

Aus der Patentschrift EP0972681 ist ein Ordnungssystem zur Aufnahme von Gebrauchsgegenständen im Fahrzeug bekannt. Dieses System umfasst eine Hängelasche, welche an ihrem einen Ende eine Ausnehmung und an ihrem anderen Ende wenigstens ein hakenförmiges Element aufweist. Das Hakenelement ist mit der Lasche über ein Gelenk verbunden. Die Lasche weist an ihrem zweiten Ende eine Öffnung auf, durch welche sich ein Zapfen erstreckt, auf welchem das hakenförmige Element angeordnet ist. Dieses hakenförmige Element ist an beiden Seiten am Zapfen schwenkbar angeordnet.

Nachteilig bei derartiger Lösung ist die komplizierte, aus mehreren Teilen bestehende Konstruktion, wodurch dieses Hängesystem unwirtschaftlich erscheint. Weiter ist hier der komplizierte Ein- und Ausbau ersichtlich, d.h. das Ausnehmen der Hängelasche aus der Metallführung (den Stäben) der Kopfstütze sowie ihr Einstecken nicht allzu benutzerfreundlich ist.

Letzteres gilt auch für die DE 20 2008 010 430 U1, die dem Oberbegriff des Anspruchs 1 der vorliegenden Erfindung entspricht.

### Darstellung der Erfindung

Die Aufgabe wird durch eine erfindungsgemäße Aufhängevorrichtung gelöst, vgl. Anspruch 1, welche an die Metallführungsstäbe der Kopfstütze des Fahrzeugsitzes angebracht werden kann. An die Aufhängevorrichtung können Gebrauchsgegenstände der Fahrzeuginsassen aufgehängt werden. Die Aufhängevorrichtung weist zwei Schenkel auf. Die Darstellung der Erfindung liegt darin, dass beide Schenkel federnd biegbar ausgebildet sind und jeder dieser Schenkel an seinem Ende einen Bügel aufweist. Diese Bügel sind an der Aufhängevorrichtung im Wesentlichen in einer Distanz voneinander ausgebildet, welche dem Abstand der Metallführungsstäbe der Kopfstütze entspricht. Jeder Schenkel weist einen Betätigungsgriff auf. Beide Betätigungsgriffe sind für die Verschwenkung einzelner Bügel ausgestaltet.

Die Aufhängevorrichtung kann an ihrem unteren Rand mindestens einen Haken für die Aufhängung von Gebrauchsgegenständen der Fahrzeuginsassen umfassen.

Jeder der am Ende einzelner Schenkel der Aufhängevorrichtung angeordneten Bügel kann eine Anlauffläche aufweisen. Diese Anlaufflächen dienen zum zügigen und problemlosen Einhaken der Aufhängevorrichtung an die Metallführungsstäbe der Kopfstütze. Die Aufhängevorrichtung ist aus einem federnden festen Kunststoff ausgebildet. Die Form und das verwendete Material ermöglichen eine intuitive, einfache und eindeutige Montage an die Metallführungsstäbe der Kopfstütze. Die Anlaufflächen im oberen Teil der Bügel der Aufhängevorrichtung dienen zur Einführung zwischen die Metallführungsstäbe der Kopfstütze. Nach dem Ergreifen der Aufhängevorrichtung und ihrem Einstecken zwischen die Metallführungsstäbe der Kopfstütze wird der obere Einhakteil der Aufhängevorrichtung zusammengedrückt. Nach der Überquerung der Metallführungsstäbe der Kopfstütze wird die Aufhängevorrichtung durch die Federung seiner Schenkel wieder gespreizt und die Bügel an die Metallführungsstäbe der Kopfstütze eingehakt, wodurch die Aufhängevorrichtung verankert wird.

Die Aufhängevorrichtung kann im Fahrzeug an die Vorder- sowie Rückseite der Hintersitzlehnen angeordnet werden.

### Übersicht der Figuren der Zeichnungen

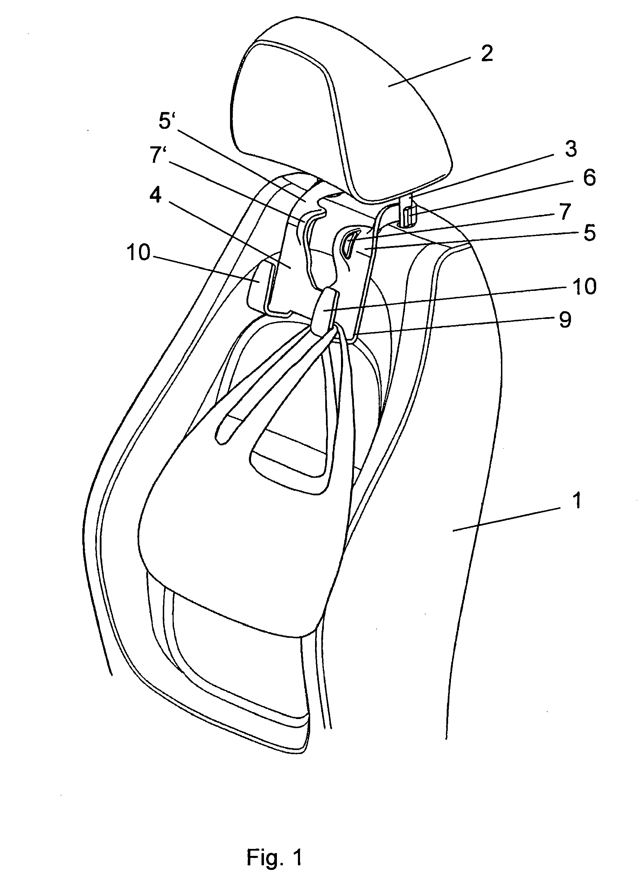

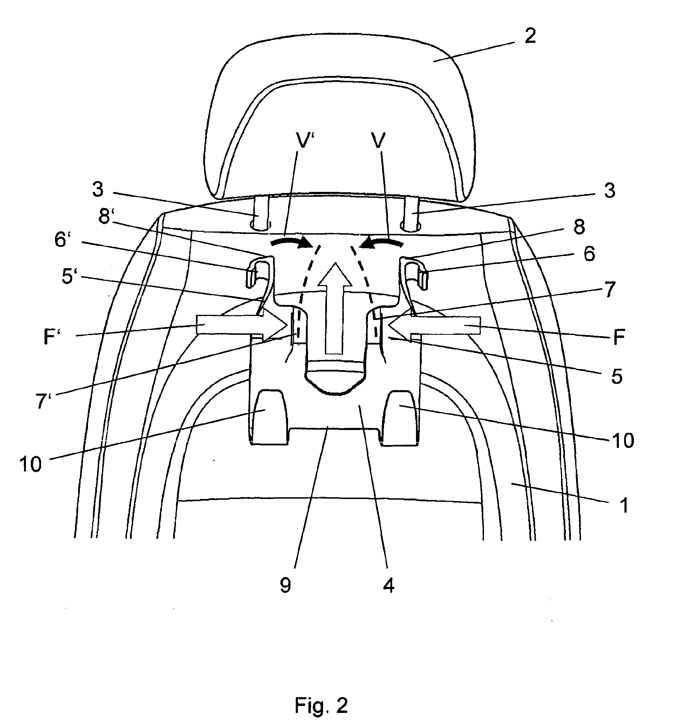

In der Fig. 1 ist in einer perspektivischen Gesamtansicht die an dem Fahrzeugsitz aufgehängte Aufhängevorrichtung und in Fig. 2 in einer Frontansicht die Aufhängevorrichtung einschl. ihrer Montage an die Metallführungsstäbe der Fahrzeugsitzkopfstütze dargestellt.

### Ausführungsbeispiel der Erfindung

In der Fig. 1 ist der Fahrzeugsitz 1 dargestellt, an dem mittels einer Metallführung 3 (Stab, Rohr) die Kopfstütze 2 angebracht ist. An dieser Metallführung 3 ist die erfindungsgemäße Aufhängevorrichtung 4 befestigt, die auf dem Vorder- oder Hintersitz 1 aufgehängt und an der Metallführung 3 der Kopfstütze 2 an der Vorder- oder Rückseite des Sitzes 1 eingehakt werden kann. Die so am Sitz 1 aufgehängte Hängevorrichtung 4 dient zur Aufhängung von Gegenständen für den Bedarf der Insassen, wie z.B. von Taschen, Rucksäcken, verschiedenen kleinen Gebrauchsgegenstände, Koffer, Boxen, Kleiderbügel usw. Die Aufhängevorrichtung 4 nach Fig. 1 und 2 umfasst zwei Schenkel 5, 5', die spiegelsymmetrisch um die imaginäre Längsachse der Aufhängevorrichtung 4 ausgebildet sind. Beide Schenkel 5, 5' sind federnd biegbar ausgebildet und jeder dieser Schenkel 5, 5' weist an seinem Ende einen Bügel 6, 6' auf, wobei diese Bügel 6, 6' für korrektes Einhaken der Hängevorrichtung 4 an einzelne Metallführungsstäbe 3 der Kopfstütze 2 ausgebildet und ausgestaltet sind. Die Bügel 6, 6' sind an der Aufhängevorrichtung 4 im Wesentlichen in einer Distanz voneinander ausgebildet, welche dem Abstand der Metallführungsstäben 3 der Kopfstütze 2 entspricht.

Ferner weist jeder Schenkel 5, 5' einen Betätigungsgriff 7, 7' auf. Beide Betätigungsgriffe 7, 7' sind für die Verschwenkung einzelner Bügel 6, 6' ausgestaltet und deshalb gleich wie die Schenkel 5, 5' spiegelsymmetrisch um die imaginäre Längsachse der Aufhängevorrichtung 4 ausgebildet.

Die Aufhängevorrichtung 4 umfasst an ihrem unteren Rand 9 in den Ecken zwei Haken 10 für die Aufhängung verschiedener Gegenstände für den Bedarf der Fahrzeuginsassen.

Jeder der Bügel 6, 6' am oberen Ende einzelner Schenkel 5, 5' der Aufhängevorrichtung 4 weist eine Anlauffläche 8, 8' auf. Diese Anlaufflächen 8, 8' dienen zum zügigen und problemlosen Einhaken der Aufhängevorrichtung 4 an die Metallführungsstäbe 3 der Kopfstütze 2. Die Aufhängevorrichtung 4 ist aus einem federnden festen Kunststoff ausgebildet.

Die Form der Aufhängevorrichtung 4 sowie das in der Konstruktion verwendete Material ermöglichen eine intuitive, einfache und eindeutige Montage an die Metallführungsstäbe 3 der Kopfstütze 2, nach Fig. 2. Die Anlaufflächen 8, 8' im oberen Teil der Bügel 6, 6' der Aufhängevorrichtung 4 dienen zur Einführung zwischen die Metallführungsstäbe 3 der Kopfstütze 2. Nach dem Ergreifen der Aufhängevorrichtung 4 und ihrem Einstecken zwischen die Metallführungsstäbe 3 der Kopfstütze 2 werden entsprechend der Pfeile V, V' beide Bügel 6, 6' in der Richtung zur imaginären Längsachse der Aufhängevorrichtung 4 (in die gestrichelt eingezeichnete Position nach Fig. 2) verschwenkt und somit der obere Einhakteil der Aufhängevorrichtung 4 zusammengedrückt. Nach der Überquerung der Metallführungsstäbe 3 der Kopfstütze 2 wird die Aufhängevorrichtung 4 durch die Federung ihrer Schenkel 5, 5' wieder gespreizt und die Bügel 6, 6' an die Metallführungsstäbe 3 der Kopfstütze 2 eingehakt, wodurch die Aufhängevorrichtung 4 verankert wird.

Für die Einführung der Aufhängevorrichtung 4 zwischen die Metallführungsstäbe 3 der Kopfstütze 2 können auch die Betätigungsriffe 7, 7' genutzt werden, und zwar so, dass durch Zusammendrücken in der Pfeilrichtung F, F'beide Bügel 6, 6' in der Richtung zur imaginären Längsachse der Aufhängevorrichtung 4 verschwenkt werden. Nach der Überquerung der Metallführungsstäbe 3 der Kopfstütze 2 und dem Loslassen der Betätigungsriffe 7, 7, wird die Aufhängevorrichtung 4 ihrer Schenkel 5, 5' wieder gespreizt und die Bügel 6, 6' an die Metallführungsstäbe 3 der Kopfstütze 2 eingehakt, wodurch die Aufhängevorrichtung verankert wird.

Der Ausbau erfolgt analog, jedoch in umgekehrter Reihenfolge. Für den Ausbau müssen mit den Fingern einer Hand (oder beider Hände) beide Betätigungsriffe 7, 7' in der Richtung der Pfeile F, F' zueinander gedrückt werden und die Aufhängevorrichtung 4 von der Kopfstütze 2 entnommen werden.

Der untere Teil der Aufhängevorrichtung (die Haken), der vom Sitz in Fahrzeuginnenraum herausragt und zur Aufhängung der Last dient, wird aus Sicherheitsgründen durch zwei breite gerundete Flächen gebildet.

### Gewerbliche Anwendbarkeit

Die an die Metallführungsstäbe der Kopfstütze anbringbare erfindungsgemäße Aufhängevorrichtung kann in allen Fahrzeugen eingesetzt werden und vorteilhaft an die Vorder- sowie Rückseite der Hintersitz- und Beifahrersitzlehne, beim Fahrersitz nur an der Lehnenrückseite angeordnet werden.

### Verwendete Bezeichnungen

- 1: Fahrzeugsitz
- 2: Kopfstütze
- 3: Metallführung der Kopfstütze
- 4: Aufhängevorrichtung
- 5, 5': Schenkel der Aufhängevorrichtung
- 6, 6': Bügel
- 7, 7': Betätigungsgriff
- 8, 8': Anlauffläche des Bügels
- 9: unterer Rand der Aufhängevorrichtung
- 10: Haken der Aufhängevorrichtung
- F, F': Richtungspfeile der Krafteinwirkung auf den Griff
- V, V': Richtungspfeile der Verschwenkung der Schenkel

## Patentansprüche

1. Aufhängevorrichtung (4), die an die Metallführungsstäbe (3) der Kopfstütze (2) eines Fahrzeugsitzes (1) anbringbar ist, zur Aufhängung von Gegenständen für den Bedarf der Insassen dient und zwei Schenkel (5, 5') aufweist, wobei jeder Schenkel (5, 5') an seinem Ende einen Bügel (6, 6') aufweist, wobei beide Bügel (6, 6') an der Aufhängevorrichtung (4) im Wesentlichen in einer Distanz voneinander ausgebildet sind, welche dem Abstand der Metallführungsstäbe (3) der Kopfstütze (2) entspricht, und wobei beide Schenkel (5, 5') als federnd biegbar ausgebildet sind, **dadurch gekennzeichnet , dass** jeder Schenkel (5, 5') einen Betätigungsgriff (7, 7') aufweist, wobei beide Betätigungsgriffe (7, 7') für die Verschwenkung einzelner Bügel (6, 6') ausgebildet sind.

2. Aufhängevorrichtung (4) nach Anspruch 1, **dadurch gekennzeichnet , dass** jeder Bügel (6, 6') eine Anlauffläche (8, 8') zum zügigen Einhaken der Aufhängevorrichtung (4) an die Metallführungsstäbe (3) der Kopfstütze (2) aufweist.

3. Aufhängevorrichtung (4) nach vorgehenden Ansprüchen **dadurch gekennzeichnet , dass** am unteren Rand (9) der Aufhängevorrichtung (4) wenigstens ein Haken (10) ausgebildet ist.

## Claims

1. Suspension device (4) which can be attached to the metal guide rods (3) of the headrest (2) of a vehicle seat (1), serves for the suspension of objects for the occupants' requirements and has two limbs (5, 5'), wherein each limb (5, 5') has a clip (6, 6') at the end thereof, wherein the two clips (6, 6') are essentially formed on the suspension device (4) at a distance from each other that corresponds to the distance between the metal guide rods (3) of the headrest (2), and wherein the two limbs (5, 5') are designed to be resiliently bendable, **characterized in that** each limb (5, 5') has an actuating handle (7, 7'), wherein the two actuating handles (7, 7') are designed for the pivoting of individual clips (6, 6').

2. Suspension device (4) according to Claim 1, **characterized in that** each clip (6, 6') has a run-on surface (8, 8') for the swift hooking of the suspension device (4) onto the metal guide rods (3) of the headrest (2).

3. Suspension device (4) according to the preceding claims, **characterized in that** at least one hook (10) is formed on the lower edge (9) of the suspension device (4).

## Revendications

1. Dispositif de suspension (4) qui peut être attaché aux tiges de guidage métalliques (3) de l'appui-tête (2) d'un siège de véhicule (1), sert à suspendre des objets pour les besoins des occupants et comprend deux branches (5, 5'), chaque branche (5, 5') comprenant à son extrémité un arceau (6, 6'), les deux arceaux (6, 6') sur le dispositif de suspension (4) étant essentiellement réalisés à une distance l'un de l'autre, laquelle distance correspond à la distance entre les tiges de guidage métalliques (3) de l'appui-tête (2), et les deux branches (5, 5') étant réalisées de manière flexible élastiquement, **caractérisé en ce que** chaque branche (5, 5') comprend une poignée d'actionnement (7, 7'), les deux poignées d'actionnement (7, 7') étant réalisées pour le pivotement d'arceaux individuels (6, 6').

2. Dispositif de suspension (4) selon la revendication 1, **caractérisé en ce que** chaque arceau (6, 6') comprend une surface de butée (8, 8') pour l'accrochage rapide du dispositif de suspension (4) aux tiges de guidage métalliques (3) de l'appui-tête (2).

3. Dispositif de suspension (4) selon les revendications précédentes, **caractérisé en ce qu'**au moins un crochet (10) est réalisé sur le bord inférieur (9) du dispositif de suspension (4).
